Europäisches Patentamt

European Patent Office

Office européen des brevets

(11) Veröffentlichungsnummer: **0 276 886**
**B1**

(12) **EUROPÄISCHE PATENTSCHRIFT**

(45) Veröffentlichungstag der Patentschrift: 09.01.91

(21) Anmeldenummer: 88200091.2

(22) Anmeldetag: 20.01.88

(51) Int. Cl.⁵: **C 03 B 37/012,** C 03 B 20/00, C 03 B 19/00, H 01 J 5/04

(54) **Verfahren und Vorrichtung zur Herstellung von rotationssymmetrischen porösen Festkörpern.**

(30) Priorität: 24.01.87 DE 3702025

(43) Veröffentlichungstag der Anmeldung:
03.08.88 Patentblatt 88/31

(45) Bekanntmachung des Hinweises auf die Patenterteilung:
09.01.91 Patentblatt 91/02

(84) Benannte Vertragsstaaten:
DE FR GB NL SE

(56) Entgegenhaltungen:
DE-A-2 637 937
DE-A-3 314 302
DE-A-3 406 148
DE-A-3 537 972

(73) Patentinhaber: **Philips Patentverwaltung GmbH Wendenstrasse 35 Postfach 10 51 49 D-2000 Hamburg 1 (DE)**
(84) **DE**

(73) Patentinhaber: **N.V. Philips' Gloeilampenfabrieken Groenewoudseweg 1 NL-5621 BA Eindhoven (NL)**
(84) **FR GB NL SE**

(72) Erfinder: **Bachmann, Peter-Klaus, Dr. Karlstrasse 55 D-5100 Aachen (DE)**
Erfinder: **Geittner, Peter, Dr. Hainbuchenstrasse 19a D-5100 Aachen (DE)**
Erfinder: **Lydtin, Hans Jürgen, Dr. Am Göpelschacht 9 D-5190 Stolberg (DE)**
Erfinder: **Romanowski, Gerd, Dr. Mauerstrasse 42 D-5100 Aachen (DE)**

(74) Vertreter: **Nehmzow-David, Fritzi-Maria et al Philips Patentverwaltung GmbH Wendenstrasse 35 Postfach 10 51 49 D-2000 Hamburg 1 (DE)**

## Beschreibung

Die Erfindung betrifft ein Verfahren zur Herstellung von rotationssymmetrischen porösen Festkörpern, bei dem das Ausgangsmaterial für den Festkörper in Form einer Suspension, bestehend aus dem Werkstoff des auszubildenden Festkörpers als Feststoff und einem flüssigen Dispergiermittel in eine Hohlform mit einer der Geometrie des auszubildenden Festkörpers entsprechenden Geometrie eingebracht wird, derart, daß die Hohlform während des Einbringens der Suspension um ihre Längsachse gedreht wird, wobei sich ein gewisser Feststoffanteil der Suspension an der Innenwandung der Hohlform ablagert und überschüssige Restsuspension abgeführt wird, wonach der entstandene Grünkörper weiteren Prozeßschritten zur endgültigen Herstellung des Festkörpers unterzogen wird.

Die Erfindung betrifft weiter eine Vorrichtung zur Durchführung dieses Verfahrens gemäß dem Oberbegriff des Anspruchs 21.

Ein Verfaren der eingangs beschriebenen Art ist bekannt aus GB-A-682 580. Dieses bekannte Verfahren dient dazu, poröse Glasrohre, z.B. als Filter für Laborzwecke, herzustellen, wobei es auf eine möglichst gleichmäßige Porenverteilung und Porengröße zwischen den angeschmolzenen Glaspartikeln ankommt und die Poren untereinander in Verbindung stehen müssen.

Zu diesem Zweck werden Suspensionen von Glaspulver möglichst einheitlicher Korngröße in einem, ein Absetzen der Festkörperpartikel verhindernden Bindemittel ständig gerührt, um die Feststoffpartikel innerhalb der Suspension in einem gewünschten, der späteren Porosität entsprechenden, Verteilungsgrad zu halten, bevor sie in die Zentrifuge eingebracht werden und dort auf der Innenwand einen lockeren Verbund abgeschiedener Feststoffpartikel bilden.

Nachteilig ist hierbei, daß das Verfahren eine möglichst einheitliche Korngrößenverteilung des Rohmaterials verlangt und daher entsprechend vermahlene Rohstoffe verwendet werden müssen. Durch einen Mahlvorgang besteht außerdem die Gefahr der Materialverunreinigung durch Abrieb. Bei Verwendung von kommerziell erhältlichen Pulvern, die z.B. über Flammenhydrolyse oder Fällung gewonnen sind, entfällt die mit dem Mahlvorgang verbundene Verunreinigung, diese Pulver weisen in der Regel jedoch eine sehr breite Korngrößenvereilung auf. Verwendet man solche Pulver bei dem in GB-A-682 580 beschriebenen Verfahren, so ist die Herstellung von makroskopisch homogen aufgebauten Grünkörpern schwierig, da die Teilchen unterschiedlicher Korngröße bei der Zentrifugierung separiert werden und der abgeschiedene Körper dann in der Regel Dichtegradienten aufweist. Dies kann bei der Weiterverarbeitung zu Schwierigkeiten wie z.B. zu Schwindungsrissen führen. Nach dem bekannten Verfahren erfolgen überdies das Befüllen der Zentrifuge und das Abzentrifugieren zeitlich voneinander getrennt, es liegt also ein diskontinuierlicher Prozeß vor, was eine Fertigung verteuert.

Der Aufbau von Rohren mit größerer Wandstärke erfordert überdies das mehrfache Befüllen der Zentrifuge, womit zeitaufwendige Montagearbeiten verbunden sind. Der Zeitaufwand ist dann besonders groß, wenn der poröse Körper aus vielen Einzelschichten z.B. unterschiedlicher Materialzusammensetzungen aufgebaut sein soll. In diesem Fall muß die Zentrifuge für jede einzelne Schicht neu befüllt werden.

Bei einem aus DE-A-34 06 148 bekannten Verfahren wird von pulverförmigen Materialien ausgegangen, die mit Hilfe der Zentrifugalkraft in einen dünnen Flüssigkeitsfilm hinein abgeschieden werden. Dieses Verfahren arbeitet in der Praxis zufriedenstellend, jedoch muß die Zuführungsgeschwindigkeit des pulverförmigen Materials auf die Eindringgeschwindigkeit in den Flüssigkeitsfilm abgestimmt sein. Anderenfalls kommt es zu einem Materialstau auf der Flüssigkeitsoberfläche, der zur Bildung großer Agglomerate führen kann. Insbesondere bei der Verwendung kommerziell erhältlicher Pulver werden durch diese Mechanismen die Abscheideraten begrenzt und Inhomogenitäten im abgeschiedenen Festkörper hervorgerufen. Eine Vorrichtung gemäß dem Oberbegriff des Anspruchs 21 ist aus der DE-A-3406148 bekannt.

Der Erfindung liegt die Aufgabe zugrunde, das eingangs genannte Verfahren derart zu verbessern, daß auf einfache Weise in einem kontinuierlichen Abscheideprozeß ein makroskopisch homogen und aus mehreren Schichten gegebenenfalls unterschiedlicher definierter Zusammensetzung aufgebauter poröser, rotationssymmetrischer Festkörper mit gegenüber dem bekannten Verfahren erhöhter Abscheiderate unter Verwendung von pulverförmigem Feststoff mit nicht monodisperser Korngrößenverteilung bei erhöhter Ausbeute an Grünkörpern, die zu rißfreien Festkörpern führen, hergestellt werden kann.

Diese Aufgabe wird durch das erfindungsgemäße Verfahren dadurch gelöst, daß die Suspension derart dosiert in die Hohlform eingebracht wird, daß jeweils nur dünne Feststoffschichten einer Dicke im Bereich von $10^{-3}$ bis 5 mm kontinuierlich nacheinander ohne Unterbrechung des Zentrifugiervorganges abgeschieden werden und daß die überschüssige Restsuspension in einer solchen Menge aus der Hohlform abgeführt wird, daß immer eine Schicht von Restsuspension einer Dicke im Bereich von $10^{-1}$ bis 100 mm über dem abgelagerten Feststoff erhalten bleibt.

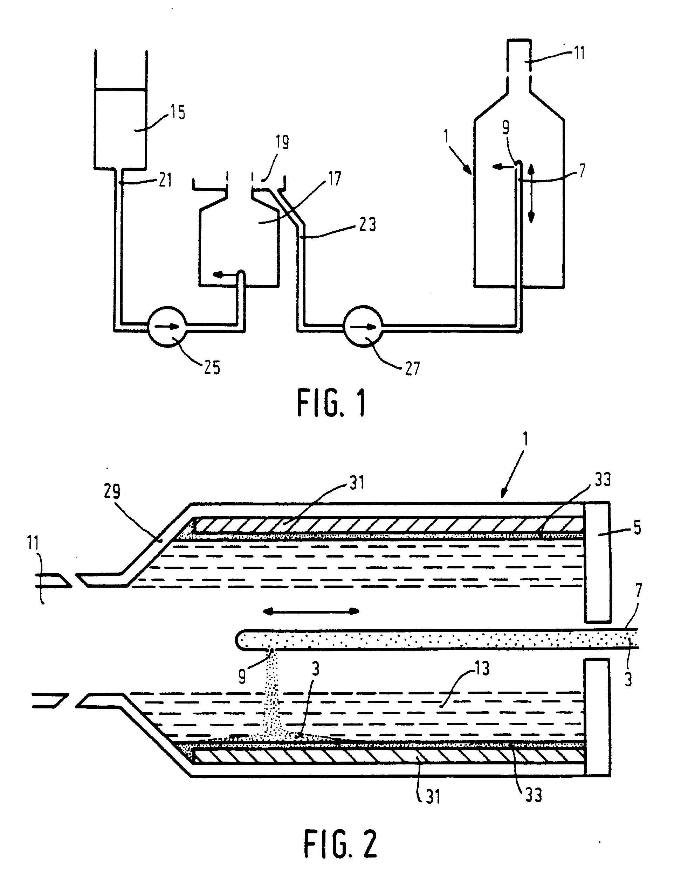

Durch die Wirkung der Zentrifugalkraft erfolgt eine Trennung des suspendierten Feststoffes entsprechend seiner Korngrößenverteilung von der flüssigen Phase des Dispergiermittels. Auf der Innenwand der Hohlform bildet sich daher eine Sedimentschicht, die von einer Schicht flüssiger Phase (Restsuspension) bedeckt ist. Diese Schicht hat, da sie von den abgelagerten Partikeln befreit ist, eine geringere Dichte als die nachströmende Suspension. Die Abscheidung des Feststoffes erfolgt aus einer dünnen Suspensionsschicht, die sich nahe an der Oberfläche des bereits abgeschiedenen Feststoffes im Innern der Hohlform befindet. In Figur 2 ist dieser Zustand schematisch dargestellt. Dies führt durch die Verkürzung des Sedimentationsweges zu hohen Abscheidegeschwindigkeiten. Die Dicke der über dem abgeschiedenen Feststoff befindlichen Restsuspensionsschicht wird durch die jeweilige Höhendifferenz zwischen einem Überlauf an der Hohlform und der Oberfläche des abgeschiedenen Feststoffes bestimmt.

Nach einer weiteren vorteilhaften Ausgestaltung des erfindungsgemäßen Verfahrens wird die Suspension mittels einer über die Länge der Hohlform verschiebbaren Einlaßvorrichtung in die Hohlform eingebracht. Hierdurch wird erreicht, daß jeweils über der Länge der Hohlform einzelne dünne Schichten von Feststoff auf der Innenwandung der Hohlform abgelagert werden können. Damit lassen sich Teilchengrößengradienten über viele dünne Schichten verteilen, so daß makroskopisch ein gleichmäßig zusammengesetzter Grünkörper entsteht. Dies führt zu einer starken Verminderung der Rißbildung bei einem späteren Trocknungsprozeß des Grünkörpers. Auf diese Weise können kommerziell erhältliche Pulver mit breiter Korngrößenverteilung zur kostengünstigen Herstellung von porösen Festkörpern herangezogen werden, ohne daß das Risiko einer sonst vermehrten Rißbildung bei der Weiterverarbeitung des Grünkörpers (Trocknen, Reinigen, Sintern) in Kauf genommen werden muß.

Nach einer vorteilhaften Weiterbildung des Verfahrens nach der Erfindung wird zweckmäßigerweise so vorgegangen, daß die Suspension derart in die Hohlform eingebracht wird, daß sie nahezu senkrecht zur Innenwandung der rotierenden Hohlform gerichtet ist.

Dies trägt ebenfalls zur Verkürzung des Sedimentationsweges und damit zu erhöhter Abscheidegeschwindigkeit bei.

Nach einer weiteren vorteilhaften Ausgestaltung des Verfahrens gemäß der Erfindung wird zunächst nur das Dispergiermittel und erst anschließend die Suspension in die rotierende Hohlform eingebracht. Hierdurch wird erreicht, daß bereits bei Beginn des Abscheidevorganges definierte Strömungsverhältnisse im Innern der Hohlform erhalten werden.

Nach einer weiteren vorteilhaften Ausgestaltung des erfindungsgemäßen Verfahrens werden zur Ausbildung von Festkörpern mit Schichten unterschiedlicher chemischer Zusammensetzung Suspensionen unterschiedlicher Zusammensetzung nacheinander in die rotierende Hohlform eingebracht. Auf diese Weise können mehrkomponentig aufgebaute Festkörper, z.B. dotierte Vorformen zur Herstellung von optischen Wellenleitern, aufgebaut werden. Sowohl die Variation der Zusammensetzung einer einzigen eingespritzten Suspension als auch die zeitliche Variation der Zuflußmengen mehrerer über unterschiedliche Einlaßvorrichtungen eingebrachter Suspensionen sind vorteilhafte Weiterbildungen zum Aufbau von porösen Festkörpern aus mehreren Komponenten.

Nach weiteren vorteilhaften Ausgestaltungen des Verfahrens gemäß der Erfindung werden als Feststoff für die Suspension $SiO_2$-Partikel ohne oder mit für die Herstellung eines gewünschten Brechungsindex geeignete(r) Dotierung eines Durchmessers im Bereich von 10 bis 500 nm, vorzugsweise 10 bis 120 nm mit einem mittleren Teilchendurchmesser von 40 nm, eingesetzt, es wird als Dispergiermittel destilliertes Wasser eingesetzt, es werden dem Dispergiermittel Stoffe mit Bindereigenschaften (z.B. Polyvinylalkohol) und/oder Stoffe zugesetzt, die zu einer chemischen Reaktion mit dem Feststoff der Suspension führen, vorzugsweise Ammoniak, oder es wird der erhaltene Grünkörper nach dem Entformen mit mit dem Feststoff des Grünkörpers reagierenden, die Oberfläche des Grünkörpers verfestigenden Stoffen nachbehandelt.

Je nach verwendetem Dispergiermittel und suspendiertem Feststoff kann eine chemische Reaktion zwischen den Komponenten der Suspension zu einem Anlösen der Partikel führen. Dieser Vorgang kann auch bewußt herbeigeführt werden, indem der Suspension entsprechende Zusätze beigefügt werden. Werden beispielsweise $SiO_2$-Partikel und (vorzugsweise Binder-haltiges) destilliertes Wasser zum Aufbau der Suspension verwendet, so führt der Zusatz von Ammoniak zu einer teilweisen Auflösung kleinerer $SiO_2$-Partikel. Die gelösten Teilchen werden bei einem nachfolgenden Trockenprozeß an die Oberfläche des porösen Grünkörpers transportiert und bleiben nach dem Verdampfen des Dispergiermittels dort zurück. Dieser Prozeß kann die mechanische Stabilität des porösen Festkörpers drastisch verbessern, da er zu einer Brückenbildung zwischen den einzelnen Partikeln führt. Dadurch wird aber die Oberfläche mit einer undurchlässigen, zu Rißbildung neigenden dünnen Festkörperschicht überzogen. Dieser nachteilige Effekt kann jedoch dadurch verhindert werden, daß die Oberfläche des Grünkörpers mit einem porösen Material bedeckt wird. Der Transport des gelösten Feststoffes endet dann nicht auf der Oberfläche des weiter zu verarbeitenden porösen Grünkörpers, sondern auf der zusätzlich angebrachten Deckschicht. Der gebildete Feststoffüberzug kann von dem Grünkörper mitsamt der Deckschicht aus einem porösen Material leicht entfernt werden. Die Neigung zur Rißbildung kann dadurch deutlich reduziert werden. Die mechanische Stabilität eines mit dem erfindungsgemäßen Verfahren hergestellten Festkörpers kann jedoch auch dadurch noch verbessert werden, indem der poröse Grünkörper nach dem Abscheidevorgang mit einer geeigneten Chemikalie gespült und auf diese Weise chemisch nachbehandelt wird.

Nach einer weiteren vorteilhaften Ausgestaltung des Verfahrens gemäß der Erfindung wird der Grünkörper zur Herstellung des Festkörpers in einem zweistufigen Verfahren abgeschieden, wobei die Hohlform in einer ersten Verfahrensstufe mit einer geringeren Beschleunigung, als sie für die Abscheidung des Festkörpers erforderlich ist, in Rotation versetzt wird, wobei sich ein gewisser Feststoffanteil aus Agglomeraten und/oder größten Partikeln an der Innenwandung der Hohlform ablagert und überschüssige Restsuspension, bestehend aus Dispergiermittel und kleineren Partikeln, abgeführt wird, wonach die Restsuspension in einer zweiten Verfahrensstufe in eine weitere oder in die vom Sediment befreite, mit der gewünschten Beschleunigung für die Abscheidung des Festkörpers rotierende Hohlform eingebracht wird. Dies kann z.B. durch eine Vorzentrifugation der Suspension bei relativ geringer Zentrifugalbeschleunigung geschehen. Sehr große Partikel, große Agglomerate aber auch Verunreinigungen mit hoher Dichte werden dabei aus der Suspension entfernt. Die von den genannten Partikeln gereinigte Suspension tritt aus dem Überlauf der Vorschaltzentrifuge aus und kann anschließend dem eigentlichen Formgebungsprozeß in der Hohlform zugeführt werden. Diese Vorbehandlung kann vom eigentlichen Formgebungsprozeß völlig getrennt stattfinden, sie kann aber auch, wie in Figur 1 dargestellt, in einen kontinuierlichen Prozeß integriert werden.

Eine Vorrichtung zur Durchführung des erfindungsgemäßen Verfahrens mit einer als Zentrifuge um ihre horizontale Längsachse antreibbaren Hohlform zur Aufnahme von Ausgangsmaterial für den Festkörper und mit einer über die Länge der Hohlform durch eine lösbar befestigte Aperturblende hindurch verschiebbaren Einlaßvorrichtung mit einer Austrittsöffnung ist gekennzeichnet durch einen Überlauf für überschüssiges Dispergiermittel des in Form einer Suspension vorliegenden Ausgangsmaterials oder für Restsuspension, mindestens einen ersten Vorratsbehälter und gegebenenfalls einen zweiten Vorratsbehälter für die Suspension mit Zuführungsleitungen, über die die zu zentrifugierende Suspension in die Hohlform mittels mindestens einer ersten Pumpe und gegebenenfalls einer zweiten Pumpe einbringbar ist.

Nach einer vorteilhaften Ausgestaltung der Vorrichtung zur Durchführung des erfindungsgemäßen Verfahrens ist die Hohlform an der Innenseite ihrer Wandung mit einer Beschichtung aus einem mit der Suspension nicht reagierenden, die Entformung eines abgeschiedenen Grünkörpers begünstigenden Material versehen.

Diese Beschichtung kann beispielsweise aus einem hydrophoben Kunststoff oder einer Flüssigkeit hoher Dichte bestehen, die mit dem die Suspension bildenden Dispergiermittel nicht mischbar ist. Hierdurch wird die Entformung des abgeschiedenen Feststoffes in Form eines Grünkörpers erleichtert und die Rißbildung beim Entformungsschritt verringert.

Es kann jedoch auch so vorgegangen werden, daß der Abscheidevorgang direkt auf der Innenwandung der rotierenden Hohlform erfolgt. Vor der Weiterverarbeitung des abgeschiedenen porösen Grünkörpers wird dieser getrocknet. Hierbei erfährt er eine geringe Trockenschwindung, die es erlaubt, den Grünkörper aus der Hohlform zu entfernen.

Bei Anwendung des erfindungsgemäßen Verfahrens und der erfindungsgemäßen Vorrichtung werden folgende Vorteile erreicht:

Zur Herstellung der Suspension können im Handel erhältliche pulverförmige Feststoffe einer breiten Korngrößenverteilung eingesetzt werden, ohne daß eine voraufgehende Klassierung erforderlich wird. Dadurch wird eine Großserienfertigung vereinfacht und kostengünstiger.

Der Abscheidungsprozeß zur Ausbildung des Grünkörpers kann kontinuierlich erfolgen, was ebenfalls zu einer kostengünstigeren Fertigung führt.

Es wird eine hohe Ausbeute an fehlerfreien Festkörpern erreicht, die, falls dies erwünscht ist, auch aus mehreren Schichten unterschiedlicher chemischer Zusammensetzung aufgebaut sein können. Dies ist z.B. von großer Bedeutung bei der Herstellung von optischen Wellenleitern mit Brechungsindexprofilen.

Anhand der Zeichnung werden Ausführungsbeispiele der Erfindung beschrieben und in ihrer Wirkungsweise erläutert.

Es zeigen:

Fig. 1 schematische Darstellung einer Vorrichtung zur Durchführung des erfindungsgemäßen Verfahrens für einen zweistufigen Prozeß,

Fig. 2 schematische Darstellung einer als Zentrifuge betreibbaren Hohlform zur Herstellung von Festkörpern im Schnitt (Teil der Vorrichtung gemäß Fig. 1).

In Figur 1 ist eine Vorrichtung zur Herstellung von rotationssymmetrischen Festkörpern durch zentrifugale Abscheidung für einen zweistufigen Abscheideprozeß dargestellt. Es kann jedoch auch in einem einstufigen Prozeß gearbeitet werden, wenn eine Vorrichtung eingesetzt wird, die auf gewisse Vorrichtungsteile verzichtet. Ein solcher einstufiger Prozeß wird im folgenden unter A beschrieben, wobei die dazu benötigten Vorrichtungsteile aus Fig. 1 beschrieben werden. Ein zweistufiger Prozeß wird unter B beschrieben.

A. Einstufiger Prozeß.

Mit dem Bezugszeichen 1 ist eine Hohlform aus z.B. $V_4A$-Edelstahl bezeichnet, die als Zentrifuge antreibbar ist (der Antrieb ist nicht dargestellt). Diese Hohlform ist in Figur 2 noch einmal schematisch vergrößert und im Schnitt gezeigt. Auf der Zentrifugeninnenwand hat sich eine sedimentierte Feststoffschicht (im folgenden als Grünkörper 33 bezeichnet) abgelagert, über der sich eine Restsuspension 13 einer geringeren Dichte als die der Ausgangssuspension 3 befindet. Eine zum Aufbau eines Festkörpers eingesetzte Suspension 3 wird über eine, durch eine die Hohlform 1 lösbar verschließende Aperturblende 5 hindurch über die Länge der Hohlform 1 verschiebbare Einlaßvorrichtung 7 mit einer Austrittsöffnung 9 eines Durchmesser von $\approx$ 1 mm in die Hohlform 1 eingebracht. Die Suspension 3 fließt mit einer Geschwindigkeit von $\approx$ 2 ml/s ein. Die rotierende Hohlform 1 hat einen Innenradius von 22 mm und eine Länge von $\approx$ 180 mm. Auf der Innenwandung der Hohlform 1 ist eine Beschichtung 31 einer Dicke von $\approx$ 3,5 mm aus einem hydrophoben Kunststoff als Substrat für den Abscheideprozeß angebracht, die das Entformen eines aus der Suspension 3' abgeschiedenen Grünkörpers 33 begünstigt. Die Hohlform 1 wird durch einen nicht dargestellten Motor in Rotation um ihre Längsachse mit einer Umdrehungsgeschwindigkeit von 30 000 bis 35 000 U/min versetzt (dies entspricht einer Beschleunigung von $\approx$ 25 000 g). Vor Beginn des Abscheidevorganges wird die Hohlform 1 zunächst über die Einlaßvorrichtung 7 mit destilliertem Wasser soweit gefüllt, bis es an einem Überlauf 11, der beim späteren Abscheideprozeß auch zum Abführen von Restsuspension 13 dient, wieder austritt. Damit wird eine Flüssigkeitsschicht von $\approx$ 12 mm Dicke auf der Innenfläche der Wandung 29 der Hohlform 1 aufgebaut.

Anschließend wird Suspension 3 aus einem Vorratsbehälter 15 über eine Zuführungsleitung 21 und die Einlaßvorrichtung 7 mittels einer Pumpe 25 in die Hohlform 1 eingebracht, wobei die Einlaßvorrichtung 7 im Innern der Hohlform 1 mit einer Hubgeschwindigkeit von $\approx$ 1 cm/s hin und her bewegt wird und sich eine Feststoffschicht (Grünkörper 33) auf der Beschichtung 31 im Innern der Hohlform 1 in Lagen von $\approx$ 0,2 bis 0,3 mm Dicke bei einer Feststoff-Abscheiderate von 24 g/min abscheidet.

B. Zweistufiger Prozeß.

In Figur 1 ist eine Vorrichtung dargestellt, mittels welcher ein zweistufiger Abscheidungsprozeß durchgeführt werden kann. Ein zweistufiger Abscheidungsprozeß ist z.B. dann angezeigt, wenn sich entweder sehr große Feststoff-Agglomerate, unerwünscht große Partikel oder Partikel mit hoher Dichte in der Suspension 3 nicht vermeiden lassen und vor der Abscheidung des Grünkörpers 33 aus der Suspension 3 entfernt werden sollen. Neben dem Vorratsbehälter 15 ist dazu ein weiterer Vorratsbehälter 17 vorgesehen, der als Zentrifuge antreibbar ist. Zur Abscheidung größter Teilchen wird der Vorratsbehälter 17 durch einen nicht dargestellten Motor in Rotation um seine Längsachse mit einer Umdrehungsgeschwindigkeit von $\approx$ 20 000 U/min versetzt (dies liegt im Bereich einer Beschleunigung von 8 000 g). Die bei diesem Vorgehen aus einem Überlauf 19 in eine Zuführungsleitung 23 eintretende Restsuspension ist noch mit $\approx$ 90% des ursprünglichen Feststoffgehaltes der Suspension beladen und wird über die Zuführungsleitung 23 mittels einer Pumpe 27 in die Hohlform 1 zur endgültigen Abscheidung des Grünkörpers 33 eingeleitet. Als Sediment im Vorratsbehälter 17 verbleiben lediglich $\approx$ 10% des Feststoffanteils der Suspension 3, bestehend aus größten Partikeln, Agglomeraten und Partikeln hoher Dichte.

Für das beschriebene Verfahren wurde eine Suspension wie folgt hergestellt:

100 g pyrogene Kieselsäure mit einer Korngrößenverteilung im Bereich von 10 bis 200 nm und einer mittleren Korngröße von 40 nm werden mit 400 ml destilliertem Wasser zu einer Suspension verrührt, die anschließend über eine Dauer von 2 h in einem Ultraschallbad homogenisiert wird.

Als Ausführungsbeispiel wurde die Herstellung eines porösen Festkörpers beschrieben, der zu einem hochreinen Quarzglasrohr auf bekannte Weise weiterverarbeitet werden kann. Ein nach dem vorliegenden Verfahren erhaltener Grünkörper eines Außendurchmessers von 36 mm und einer Wandstärke von $\approx$ 5 mm zeichnet sich durch große geometrische Genauigkeit und eine nahezu ortsunabhängige Dichte (1,05 g/cm$^3$) aus. Letzteres und die Tatsache, daß auch nach einer Trocknung und Austreiben des Dispergiermittels durch langsames Aufheizen auf $\approx$ 800°C noch eine offene Porenstruktur zur Verfügung steht, macht eine nachfolgende chlorierende Reinigung des Grünkörpers und die Sinterung zu Quarzglasrohren möglich. Verunreinigungen können z.B. H$_2$0 oder störende Metallverbindungen sein. Derartige Verunreinigungen können bei einer Temperatur von 800°C in einem bei Raumtemperatur mit SOCl$_2$ gesättigten O$_2$-Strom einer Strömungsgeschwindigkeit von 1 bis 2 1/min beseitigt werden. Die Verunreinigungen werden dabei chloriert und entweichen als flüchtige Phase. Die Dichtsinterung des offenporigen Grünkörpers zu transparentem, blasenfreiem Glas erfolgt bei 1 500°C mit einer Absenkgeschwindigkeit von 3 mm/min unter einer Helium/Chlor (1 bis 3%)-Atmosphäre eines Drucks von 10$^5$ Pa und einer Strömungsgeschwindigkeit von 1 1/min. Nach diesem Verfahren wurde ein hochreines, transparentes Quarzglas sehr hoher Oberflächengüte erhalten, das blasen- und schlierenfrei war und eine Dichte von 2,2 g/cm$^3$ hatte. Restverunreinigungen an Wasser und Übergangsmetallen betrugen weniger als 20 ppb.

Hochreine und maßgenaue Quarzrohre, wie sie nach dem vorliegenden Verfahren unter Anwendung der vorliegenden Vorrichtung herstellbar sind, können bei der Herstellung von optischen Wellenleitern, aber auch bei der Herstellung von Halogen- und Gasentladungslampen Anwendung finden.

Mit dem vorliegenden Verfahren ist es jedoch auch möglich, beliebige Suspensionen mit hochdispersem Feststoffanteil zu verarbeiten, die das Ausgangsmaterial für andere rotationssymmetrische, makroskopisch homogen aufgebaute Festkörper bilden.

**Patentansprüche**

1. Verfahren zur Herstellung von rotationssymmetrischen porösen Festkörpern, bei dem das Ausgangsmaterial für den Festkörper in Form einer Suspension (3), bestehend aus dem Werkstoff des auszubildenden Festkörpers als Feststoff und einem flüssigen Dispergiermittel in eine Hohlform (1) mit einer der Geometrie des auszubildenden Festkörpers entsprechenden Geometrie eingebracht wird, derart, daß die Hohlform während des Einbringens der Suspension um ihre Längsachse gedreht wird, wobei sich ein gewisser Feststoffanteil der Suspension an der Innenwandung der Hohlform ablagert und überschüssige Restsuspension (13) abgeführt wird, wonach der entstandene Grünkörper (33) weiteren Prozeßschritten zur endgültigen Herstellung des Festkörpers unterzogen wird, dadurch gekennzeichnet,

daß die Suspension derart dosiert in die Hohlform eingebracht wird, daß jeweils nur dünne Feststoffschichten einer Dicke im Bereich von $10^{-3}$ bis 5 mm kontinuierlich nacheinander ohne Unterbrechung des Zentrifugationsvorganges abgeschieden werden und daß die überschüssige Restsuspension in einer solchen Menge aus der Hohlform abgeführt wird, daß immer eine Schicht von Restsuspension einer Dicke im Bereich von $10^{-1}$ bis 100 mm über dem abgelagerten Feststoff erhalten bleibt.

2. Verfahren nach Anspruch 1, dadurch gekennzeichnet,

daß die Suspension (3) mittels einer über die Länge der Hohlform (1) verschiebbaren Einlaßvorrichtung (7) in die Hohlform eingebracht wird.

3. Verfahren nach den Ansprüchen 1 und 2, dadurch gekennzeichnet,

daß die Suspension (3) derart in die Hohlform (1) eingebracht wird, daß sie nahezu senkrecht zur Innenwandung der rotierenden Hohlform gerichtet ist.

4. Verfahren nach mindestens einem der vorhergehenden Ansprüche, dadurch gekennzeichnet, daß zunächst nur das Dispergiermittel und erst anschließend die Suspension (3) in die rotierende Hohlform (1) eingebracht wird.

5. Verfahren nach mindestens einem der vorhergehenden Ansprüche, dadurch gekennzeichnet, daß zur Ausbildung von Festkörpern mit Schichten unterschiedlicher chemischer Zusammensetzung die Zusammensetzung der eingebrachten Suspension (3) geändert wird.

6. Verfahren nach den Ansprüchen 1 bis 5, dadurch gekennzeichnet,

daß zum Aufbau der Suspension (3) ein pulverkeramischer Werkstoff als Feststoff eingesetzt wird.

7. Verfahren nach Anspruch 6, dadurch gekennzeichnet,

daß als Feststoff für die Suspension (3) $SiO_2$-Partikel ohne oder mit für die Herstellung eines gewünschten Brechungsindex geeignete(r) Dotierung eines Durchmessers im Bereich von 10 bis 500 nm, vorzugsweise 10 bis 200 nm mit einem mittleren Teilchendurchmesser von 40 nm, eingesetzt werden.

8. Verfahren nach Anspruch 7 dadurch gekennzeichnet,

daß als Dispergiermittel destilliertes Wasser eingesetzt wird.

9. Verfahren nach Anspruch 8, dadurch gekennzeichnet,

daß dem Dispergiermittel Stoffe mit Bindereigenschaften zugesetzt werden.

10. Verfahren nach Anspruch 9, dadurch gekennzeichnet,

daß als Stoff mit Bindereigenschaften Polyvinylalkohol eingesetzt wird.

11. Verfahren nach mindestens einem der vorhergehenden Ansprüche, dadurch gekennzeichnet,

daß dem Dispergiermittel Stoffe zugesetzt werden, die zu einer chemischen Reaktion mit dem Feststoff der Suspension (3) führen.

12. Verfahren nach den Ansprüchen 8 und 11, dadurch gekennzeichnet, daß dem Dispergiermittel Ammoniak zugesetzt wird.

13. Verfahren nach mindestens einem der vorhergehenden Ansprüche, dadurch gekennzeichnet,

daß der erhaltene Grünkörper (33) nach dem Entformen mit mit dem Feststoff des Grünkörpers reagierenden, die Oberfläche des Grünkörpers verfestigenden Stoffen nachbehandelt wird.

14. Verfahren nach Anspruch 7, dadurch gekennzeichnet,

daß als Dotierstoff $GeO_2$ eingesetzt wird.

15. Verfahren nach den Ansprüchen 7 und 8, dadurch gekennzeichnet,

daß eine Suspension (3) mit einem Feststoff: Dispergierflüssigkeit-Gewichtsverhältnis von 1:50 bis 1:3 eingesetzt wird.

16. Verfahren nach Anspruch 15, dadurch gekennzeichnet,

daß die Suspension (3) mit einer Beschleunigung > 15 000 g zentrifugiert wird.

17. Verfahren nach mindestens einem der vorhergehenden Ansprüche, dadurch gekennzeichnet,

daß der Grünkörper (33) zur Herstellung des Festkörpers in einem zweistufigen Verfahren abgeschieden wird, wobei die Hohlform (7) in einer ersten Verfahrensstufe mit einer geringeren Beschleunigung, als sie für die Abscheidung des Festkörpers erforderlich ist, in Rotation versetzt wird, wobei sich ein gewisser Feststoffanteil aus Agglomeraten und/oder größten Partikeln an der Innenwandung der Hohlform ablagert und überschüssige Restsuspension (13), bestehend aus Dispergiermittel und kleineren Partikeln, abgeführt wird, wonach die Restsuspension in einer zweiten Verfahrensstufe in eine weitere oder in die vom Sediment befreite, mit der gewünschten Beschleunigung für die Abscheidung des Festkörpers rotierende Hohlform eingebracht wird.

18. Verfahren nach Anspruch 17, dadurch gekennzeichnet,

daß die Suspension (3) in der ersten Verfahrensstufe mit einer Beschleunigung von ≈ 1 000 bis 8 000 g zentrifugiert wird.

19. Verfahren nach mindestens einem der vorhergehenden Ansprüche 1 bis 18, dadurch gekennzeichnet,

daß die hergestellten Festkörper als Komponenten für optische Wellenleiter-Vorformen verwendet werden.

20. Verfahren nach mindestens einem der Ansprüche 1 bis 18, dadurch gekennzeichnet,

daß die hergestellten Festkörper als Komponenten für Lampenkolben, insbesondere für Halogen- und Gasentladungslampen verwendet werden.

21. Vorrichtung zur Durchführung des Verfahrens nach den Ansprüchen 1 bis 16 mit einer als Zentrifuge um ihre horizontale Längsachse antreibbaren Hohlform (1) zur Aufnahme von Ausgangsmaterial für den Festkörper und mit einer über die Länge der Hohlform durch eine lösbar befestigte Aperturblende (5) hindurch verschiebbaren Einlaßvorrichtung (7) mit einer Austrittsöffnung (9) gekennzeichnet durch einen Überlauf (11) für überschüssiges Dispergiermittel des in Form einer Suspension (3) vorliegenden Ausgangsmaterials oder für Restsuspension (13), mindestens einen ersten Vorratsbehälter (15) und gegebenenfalls einen zweiten Vorratsbehälter (17) für die Suspension mit Zuführungsleitungen (21, 23), über die die zu zentrifugierende Suspension (3) in die Hohlform (1) mittels mindestens einer ersten Pumpe (25) und gegebenenfalls einer zweiten Pumpe (27) einbringbar ist.

22. Vorrichtung nach Anspruch 21, dadurch gekennzeichnet, daß der zweite Vorratsbehälter (17) als Zentrifuge antreibbar ist.

23. Vorrichtung nach den Ansprüchen 21 und 22, dadurch gekennzeichnet,

daß der zweite Vorratsbehälter (17) als Zentrifuge mit einer Beschleunigung von 1 000 bis 8 000 g und die Hohlform (1) als Zentrifuge mit einer Beschleunigung > 15 000 g antreibbar sind.

24. Vorrichtung nach Anspruch 21, dadurch gekennzeichnet,

daß die Hohlform (1) an der Innenseite ihrer Wandung (29) mit einer Beschichtung (31) aus einem mit der Suspension (3) nicht reagierenden, die Entformung eines abgeschiedenen Grünkörpers (33) begünstigenden Material versehen ist.

25. Vorrichtung nach Anspruch 24, dadurch gekennzeichnet,

daß die Beschichtung (31) aus hochmolekularen Kohlenwasserstoffen gebildet ist.

## Revendications

1. Procédé pour la fabrication de corps solides poreux à symétrie de révolution, selon lequel le matériau de départ pour le corps solide, formant une suspension (3) constituée par la matière première du corps solide à former comme substance solide et un dispersant liquide, est introduit dans une forme creuse (1) présentant une géométrie correspondant à la géométrie du corps solide à former de façon que lors de l'introduction de la suspension, la forme creuse soit mise en rotation autour de son axe longitudinal et, de ce fait, une part déterminée de la substance solide de la suspension se dépose sur la paroi intérieure de la forme creuse et la suspension résiduelle (13) excédentaire est évacuée, après quoi le semi-produit formé (33) est soumis à d'autres étapes de processus pour la réalisation définitive du corps solide, caractérisé en ce que la suspension est introduite dans la forme creuse à des choses telles que chaque fois seules de minces couches de substance solide d'une épaisseur située dans la gamme comprise entre $10^{-3}$ à 5 mm sont déposées consécutivement selon un processus continu sans interruption du processus de centrifugation et que la suspension résiduelle excédentaire est évacuée de la forme creuse selon une quantité telle qu'il subsiste toujours une couche de suspension résiduelle d'une épaisseur située dans la gamme comprise entre $10^{-1}$ à 100 mm sur la substance solide déposée.

2. Procédé selon la revendication 1, caractérisé en ce que la suspension (3) est introduite par l'intermédiaire d'un dispositif d'admission (7) pouvant être déplacé sur la longueur de la forme creuse (1) dans la forme creuse.

3. Procédé selon les revendications 1 et 2, caractérisé en ce que la suspension (3) est introduite dans la forme creuse (1) de façon à être dirigée perpendiculairement à la paroi intérieure de la forme creuse en rotation.

4. Procédé selon au moins l'une des revendications précédentes, caractérisé en ce qu'on introduit d'abord uniquement le dispersant et ensuite la suspension (3) dans la forme creuse en rotation (1).

5. Procédé selon au moins l'une des revendications précédentes, caractérisé en ce que la composition de la suspension introduite (3) est modifiée pour la formation de corps solides présentant des couches de composition chimique différente.

6. Procédé selon les revendications 1 à 5, caractérisé en ce qu'une matière première céramique pulvérulente est utilisée comme substance solide pour la formation de la suspension (3).

7. Procédé selon la revendication 6, caractérisé en ce que comme substance solide pour la suspension (3) sont utilisées des particules de $SiO_2$ sans ou avec le dopage approprié pour la réalisation d'un indice de réfraction désiré, et avec un diamètre compris entre 10 et 500 nm, de préférence 10 à 200 nm, le diamètre moyen des particules étant de 40 nm.

8. Procédé selon la revendication 7, caractérisé en ce que de l'eau distillée est utilisée comme dispersant.

9. Procédé selon la revendication 8, caractérisé en ce que le dispersant est additionné de substances présentant des propriétés de liant.

10. Procédé selon la revendication 9, caractérisé en ce que de l'alcool polyvinylique est utilisé comme substance présentant des propriétés de liant.

11. Procédé selon au moins l'une des revendications précédentes, caractérisé en ce que le dispersant est additionné de substances qui provoquent une réaction chimique avec la substance solide de la suspension (3).

12. Procédé selon la revendication 8 et 11, caractérisé en ce que le dispersant est additionné d'ammoniaque.

13. Procédé selon au moins l'une des revendications précédentes, caractérisé en ce qu'après le démoulage, le semi-produit obtenu (33) est post-traité avec des substances réagissant avec la substance solide du semi-produit et assurant la solidification de la surface du semi-produit.

14. Procédé selon la revendication 7, caractérisé en ce que Ge0₂ est utilisé comme agent de dopage.

15. Procédé selon la revendication 7 et 8, caractérisé en ce qu'on utilise une suspension (3) présentant un rapport en poids substance solide liquide de dispersion de 1:50 à 1:3.

16. Procédé selon la revendication 15, caractérisé en ce que la suspension (3) est centrifugée à une accélération supérieure à 15 000 g.

17. Procédé selon au moins l'une des revendications précédentes, caractérisé en ce que pour la fabrication du corps solide le semi-produit (33) est déposé selon un procédé à deux étapes, la forme creuse (1) étant portée à rotation dans une première étape du procédé à une accélération inférieure à celle nécessaire pour le dépôt du corps solide, rotation lors de laquelle une certaine part en substance solide constituée par des agglomérats et/ou des plus grandes particules se dépose sur la paroi intérieure de la forme creuse et la suspension résiduelle excédentaire (13) constituée par le dispersant et de plus petites particules est évacuée, après quoi dans une deuxième étape du procédé, la suspension résiduelle est introduite dans une autre forme creuse ou la forme creuse débarrassée de sédiments tournant à l'accélération requise pour le dépôt du corps solide.

18. Procédé selon la revendication 17, caractérisé en ce que dans la première étape du procédé la suspension (3) est centrifugée à une accélération de 1 000 à 8 000 g.

19. Procédé selon au moins l'une des revendications précédentes 1 à 18, caractérisé en ce que les corps solides réalisés sont utilisés comme composants pour des préformes de guides d'ondes optiques.

20. Procédé selon au moins l'une des revendications 1 à 18, caractérisé en ce que les corps solides réalisés sont utilisés comme composants pour des ampoules de lampe, notamment des lampes à halogène et des lampes à décharge dans le gaz.

21. Dispositif pour la mise en oeuvre du procédé selon les revendications 1 à 16 comportant comme centrifugeuse une forme creuse (1) pouvant être entraînée autour de son axe longitudinal et servant à la réception du matériau de départ pour le corps solide et un dispositif d'admission (7) pouvant être déplacé à travers un diaphragme d'ouverture (5) fixé de façon mobile sur la longueur de la forme creuse et présentant un orifice de sortie (9) caractérisé par un trop-plein (11) pour le dispersant excédentaire du matériau de départ présent sous forme d'une suspension (3) ou pour la suspension résiduelle (13), au moins un premier réservoir de stockage et, le cas échéant, un deuxième réservoir de stockage (17) pour la suspension munis de canalisations d'amenée (21, 23) par l'intermédiaire desquelles la suspension à centrifuger (3) peut être introduite dans la forme creuse (1) à l'aide d'au moins une première pompe (25) et, le cas échéant, d'une deuxième pompe (27).

22. Dispositif selon la revendication 21, caractérisé en ce que le deuxième réservoir de stockage (17) peut être entraîné comme centrifugeuse.

23. Dispositif selon la revendication 21 et 22, caractérisé en ce que le deuxième réservoir de stockage (17) peut être entraîné comme centrifugeuse à une accélération de 1 000 à 8 000 g et la forme creuse (1) comme centrifugeuse à une accélération supérieure à 15 000 g.

24. Dispositif selon la revendication 21, caractérisé en ce que la face intérieure de la paroi (29) de la forme creuse (1) est munie d'un revêtement (31) en un matériau qui ne réagit pas avec la suspension (3) et qui facilite le démoulage du semi-produit déposé (33).

25. Dispositif selon la revendication 24, caractérisé en ce que le revêtement (31) est constitué par des hydrocarbures d'un poids moléculaire élevé.

**Claims**

1. A method of manufacturing rotationally symmetrical porous solid bodies, in which the starting material for the solid body, being a suspension (3) consisting of the material for the solid body in solid form and a liquid dispersing agent, is introduced into a hollow mould (1) whose geometry corresponds to that of the solid body to be formed, such that during the introduction of the suspension the hollow mould is rotated about its longitudinal axis, thereby depositing a certain quantity of solid of the suspension on the inner wall of the hollow mould, and the excess residual suspension (13) being removed, after which the green body (33) thus formed is subjected to further process steps to manufacture the solid body, characterized in that the suspension is introduced into the hollow mould in such doses that each time only thin solid layers having a thickness in the range from $10^{-3}$ to 5 mm are continuously, consecutively deposited without interruption of the centrifuging process, and in that such a quantity of excess residual suspension is removed from the hollow mould that there always remains a layer of residual suspension having a thickness in the range from $10^{-1}$ to 100 mm on top of the deposited solid matter.

2. A method as claimed in Claim 1, characterized in that the suspension (3) is introduced into the hollow mould by means of a feeding device (7) which can be moved over the full length of the hollow mould (1).

3. A method as claimed in Claims 1 and 2, characterized in that the suspension (3) is introduced into the hollow mould (1), such that it is directed substantially perpendicularly to the inner wall of the rotating hollow mould.

4. A method as claimed in at least one of the preceding Claims, characterized in that at first only the dispersing agent is introduced into the rotating hollow mould (1) and then the suspension (3) is introduced into said mould.

5. A method as claimed in at least one of the preceding Claims, characterized in that for the formation of solid bodies having layers of different chemical composition, the composition of the suspensions (3) used is changed.

6. A method as claimed in Claims 1 to 5, characterized in that a powdered ceramic material is used as the solid to form the suspension (3).

7. A method as claimed in Claim 6, characterized in that $SiO_2$ particles which may or may not have a doping suitable for the manufacture of a desired refractive index are used as the solid for the suspension (3), which particles have a diameter in the range from 10 to 500 nm, preferably from 10 to 200 nm, with an average particle diameter of 40 nm.

8. A method as claimed in Claim 7, characterized in that distilled water is used as a dispersing agent.

9. A method as claimed in Claim 8, characterized in that substances having binding properties are added to the dispersing agent.

10. A method as claimed in Claim 9, characterized in that polyvinyl alcohol is used as a substance having binding properties.

11. A method as claimed in at least one of the preceding Claims, characterized in that substances bringing about a chemical reaction with the solid of the suspension (3) are added to the dispersing agent.

12. A method as claimed in Claims 8 and 11, characterized in that ammonia is added to the dispersing agent.

13. A method as claimed in at least one of the preceding Claims, characterized in that after the green body (33) obtained has been removed from the mould, it is treated with substances which react with the solid of the green body and which solidify the surface of the green body.

14. A method as claimed in Claim 7, characterized in that $GeO_2$ is used as a dopant.

15. A method as claimed in Claims 7 and 8, characterized in that a suspension (3) having a solid: dispersing liquid weight ratio from 1:50 to 1:3 is used.

16. A method as claimed in Claim 15, characterized in that the suspension (3) is centrifuged at an acceleration of > 15000 g.

17. A method as claimed in at least one of the preceding Claims, characterized in that for the manufacture of the solid body, the green body (33) is deposited in a two-step method, in which in the first step the hollow mould (1) is made to rotate at an acceleration rate lower than that necessary for depositing the solid body, a certain quantity of solid material consisting of agglomerates and/or the largest particles being deposited on the inner wall of the hollow mould, and excess residual suspension (13) consisting of dispersing agents and smaller particles being removed, after which, in a second step, the residual suspension is introduced into a further hollow mould, or a hollow mould from which the sediment has been removed, which is rotated at the required acceleration rate for the deposition of the solid body.

18. A method as claimed in Claim 17, characterized in that in the first step of the method the suspension is centrifuged at an acceleration from ≈ 1000 to 8000 g.

19. A method as claimed in at least one of the Claims 1 to 18, characterized in that the solid bodies are used as components for preforms of optical waveguides.

20. A method as claimed in at least one of the Claims 1 to 18, characterized in that the solid bodies produced are used as components for lamp envelopes, in particular, for halogen lamps and gas discharge lamps.

21. An arrangement for carrying out the method as claimed in Claims 1 to 16, comprising a hollow mould (1) for holding starting material for the solid body, which mould can be rotated about its horizontal longitudinal axis like a centrifuge, and comprising a feeding device (7) having an outlet (9), which feeding device can be moved through a detachable aperture diaphragm (5) over the full length of the hollow mould, characterized by an overflow (11) for any excess dispersing agent of the starting material present in the form of a suspension (3) or for residual suspension, and at least a first reservoir (15), and possibly a second reservoir (17) for the suspension, having supply pipes (21, 23) through which the suspension (3) to be centrifuged can be introduced into the hollow mould (1) by means of at least a first pump (25) and possibly a second pump (27).

22. An arrangement as claimed in Claim 21, characterized in that the second reservoir (17) can be driven like a centrifuge.

23. An arrangement as claimed in Claims 21 and 22, characterized in that the second reservoir (17) can be driven like a centrifuge at an acceleration from 1000 to 8000 g, and the hollow mould (1) can also be driven like a centrifuge at an acceleration > 15000 g.

24. An arrangement as claimed in Claim 21, characterized in that the hollow mould (1) is provided on the inside of its wall (29) with a coating (31) of a material which does not react with the suspension (3) and which facilitates the removal from the mould of a deposited green body (33).

25. An arrangement as claimed in Claim 24, characterized in that the coating (31) consists of hydrocarbons having a high molecular weight.

FIG. 1

FIG. 2

1